(19) **Europäisches Patentamt**

**European Patent Office**

**Office européen des brevets**

(11) **EP 0 807 528 B1**

(12) **EUROPEAN PATENT SPECIFICATION**

(45) Date of publication and mention
of the grant of the patent:
**12.12.2001 Bulletin 2001/50**

(51) Int Cl.⁷: **B41J 19/18**

(21) Application number: **97201362.7**

(22) Date of filing: **07.05.1997**

(54) **Method and system for detecting the position of a carriage**

Verfahren und System zur Detektierung einer Wagenlage

Méthode et système pour détecter la position d'un chariot

(84) Designated Contracting States:
**DE FR GB NL**

(30) Priority: **15.05.1996 EP 96201317**

(43) Date of publication of application:
**19.11.1997 Bulletin 1997/47**

(73) Proprietor: **Océ-Technologies B.V.**
**5914 CC Venlo (NL)**

(72) Inventor: **Simons, Johannes Mathieu Marie**
**5923 AG Venlo (NL)**

(74) Representative: **Hanneman, Henri W., Dr. et al**
**Océ-Technologies B.V.**
**Patents & Information**
**St. Urbanusweg 43**
**P.O. Box 101**
**5900 MA Venlo (NL)**

(56) References cited:
**EP-A- 0 634 279**    **EP-A- 0 644 056**
**US-A- 5 184 011**

• **PATENT ABSTRACTS OF JAPAN vol. 015, no. 414 (M-1171), 22 October 1991 & JP 03 173667 A (NEC CORP;OTHERS: 01), 26 July 1991,**

## Description

The present invention relates to a method and system for detecting the position of a moving carriage in a printer, plotter or scanner.

When a carriage carrying for example a printhead in case of a printing apparatus or an optical head in case of scanning apparatus is moved along a line to be printed or scanned, it is essential to detect the actual position of the carriage or the timings at which the carriage reaches predetermined positions with high accuracy in order to provide synchronizing signals for the printing or scanning process. According to a conventional approach, an encoder scale, a so-called codestrip is stationarily mounted in the frame of the apparatus and extends over the whole length of the path of travel of the carriage. The codestrip is provided with regularly spaced position marks which will be termed "slits" hereinafter. A sensor mounted on the carriage is arranged to detect the individual slits and to deliver a sequence of detection signals, e.g. a pulse train reflecting the sequence of slits, so that the position of the carriage can be determined by counting the pulses of this pulse train.

If the sensor is a transmission-type or reflection-type optical sensor, the position marks on the codestrip may be formed by slits in the proper sense of the word, i.e. a sequence of transparent and opaque regions, or by bars, i.e. a sequence of bright and dark areas. In general, the encoding system is not limited to optical systems but may comprise, for example, a magnetic codestip and a magnet head for detecting magnetic position marks.

Such a magnetic system is disclosed in EP-A-0 478 394. The system comprises two sensors and a magnetic codestrip on a piston rod.

US-A-5 170 416 discloses a method according to the preamble of claim 1 employing a transmission-type optical sensor. This document is concerned with the correction of duty-cycle errors generated by imperfections in the codestrip and/or the sensor. Such duty-cycle errors may for example be caused by differences in the rise and fall times of the pulse train delivered by the sensor or by random errors in the positions of the opaque-transparent and transparance-opaque transitions of the codestrip. To correct these errors, it is proposed to measure the time elapsed between the successive opaque-transparent transitions and to generate a synthetic pulse signal the duty-cycle of which is proportional to the measured time.

If a comparatively cheap codestrip is used, there may be considerable random variations between the successive opaque-transparent transition or, more generally, between the positions of successive slits. In addition, a systematic error may be caused by expansion or shrinkage of the codestrip due to mechanical stresses or temperature variations. These kinds of errors cannot be corrected with the prior proposed system.

In order to achieve a reliable position detection, it is therefore necessary to use a codestrip which has a high quality and is rather expensive. In particular, the codestrip should be made of a material which has a thermal expansion coefficient close to zero. The costs for such a codestrip and the mounting structure thereof tend to increase drastically when the carriage has to travel over a large distance, as is the case for example in a large-format printing apparatus in which a single print line may have a length of more than one meter.

It is therefore an object of the invention to improve the accuracy of the position detection without imposing higher quality requirements on the codestrip.

This object is achieved with a method according to claim 1 and a system as specified in claim 8.

According to the invention, each slit of the codestrip is detected twice with the aid of two sensors which are mounted on the carriage at a predetermined spacing in the direction of movement. The timings of the individual detection signals are measured, and the position information is derived from these timings and is calibrated on the basis of the distance between the two sensors. The distance between the sensors is much smaller than the total length of travel of the carriage and can therefore be measured and/or stably adjusted with high accuracy. This distance is then used to detect and correct errors in the positions of the slits of the codestrip. If, for example, the distance L between the two sensors is j times the nominal spacing d between successive slits plus a certain remainder r (j being an integer), and the trailing one of the sensors detects a specific slit i, then the distance between the slits i and i+j must be L - r. If the carriage has the velocity v, and t is the time which has lapsed since the leading sensor has detected the slit i+j, r can be calculated from the equation $r = v\, t$. The velocity v can directly be derived from the timings of the detection signals, using, for example, the nominal distance between successive slits or the known distance L. Thus, it is possible to calculate the actual distance between the slits i and i+j from the values L, v and t. The result obtained in this way is highly reliable, because L and t are known or can be measured, respectively, with high accuracy and a possible uncertainty in the value v influences only the remainder r, i.e. a very small fraction of the total distance.

When the codestrip is free of errors, the result obtained in this way should be equal to j times the nominal slit distance d. If it is found that there exists a discrepancy between the calculated value and $j*d$, then the calculated value, which is more reliable, can be used to calibrate the slit distances d in the corresponding range of the codestrip, i.e. between i and i+j. Thus, a systematic error in the position detection can be corrected efficiently. The correction can be made in real time, i.e. the position of the trailing one of the two sensors can be detected with high accuracy and without substantial accumulation of errors over the total distance of travel.

Useful further developments of the invention are indicated in the dependent claims.

In a preferred embodiment, the individual slit-to-slit spacings $d_i$ are corrected on the basis of the timings of the detection signals and the velocity of the carriage. In this case, it is possible to correct not only systematic errors due to expansion of shrinkage of the codestrip but also random fluctuations in the distances between the individual slits.

Preferred embodiments of the invention will now be described in conjunction with the accompanying drawings in which:

Fig. 1 is a schematic perspective view of a printhead carriage travelling along a platen of a printer, and a system according to the invention for detecting the position of the carriage;

Fig. 2 is a block diagram of the position detecting system; and

Fig. 3 is a time-displacement diagram illustrating the function principal of the invention.

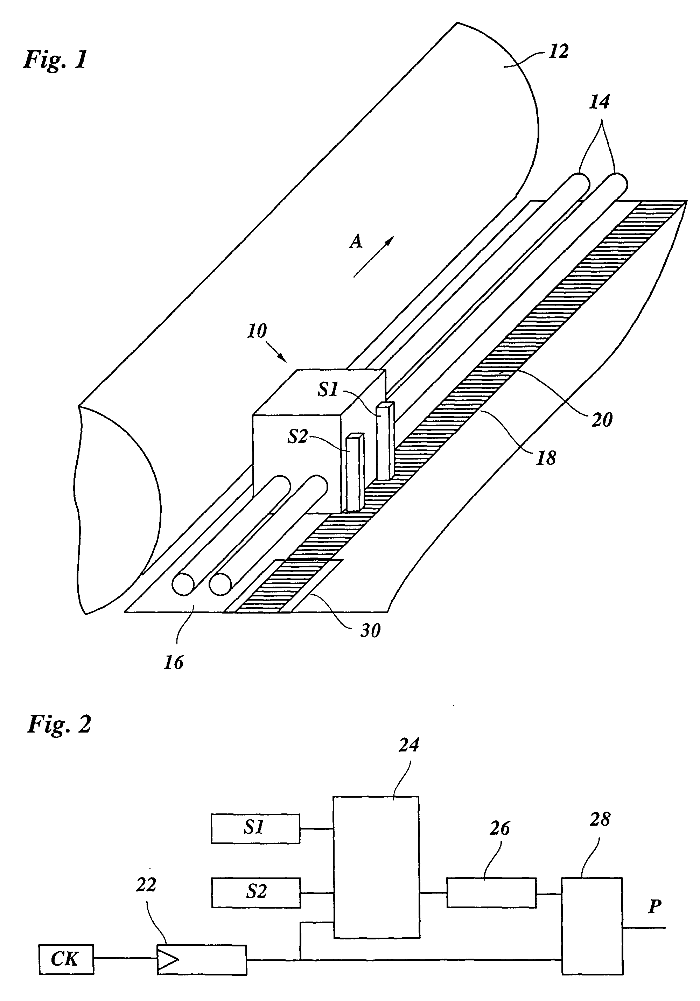

In figure 1, a carriage 10 carrying for example an ink-jet printhead is moved back and forth in main scanning direction along a platen 12 on which a printing medium is transported in subscanning direction. The carriage 10 is guided on guide rails 14 which are mounted in a fixed position in relation to the platen 12 and a frame body 16. A codestrip 18 having a plurality of position marks or slits 20 is fixed to the frame body 16 and extends along the guide rails 14. Two optical sensors S1 and S2 are fixedly mounted on the carriage 10 with a predetermined distance therebetween in lengthwise direction of the codestrip 18. The sensitive portions of the sensors S1, S2 face the codestrip, so that the individual slits 20 can be detected.

For simplifying the discussion, it shall be assumed that the carriage 10 moves in the direction indicated by an arrow A. Of course, the system according to the invention can operate in an analogous way when the carriage moves in the opposite direction. In relation to the direction A the sensor S1 is the leading sensor and the sensor S2 is the trailing sensor.

In a first embodiment, the effective distance L between the two sensors S1 and S2 is adjusted or measured with highest possible accuracy when the sensors are mounted on the carriage. Further, the substrate on which the two sensors are mounted is made of a material which undergoes no substantial thermal expansion, so that the distance L will not be altered during the life time of the apparatus. In a practical embodiment, the distance L may be in the order of 8 mm, whereas to the total length of the platen 12 may be in the order of one meter or more. Since the distance between the two sensors is comparatively small, the hardware which guaranties the stability of the distance value L is available at comparatively low costs.

In contrast, if a similar level of accuracy would be required for the positions of the slits 20 over the whole length of the codestrip 18, considerable expenses would be necessary for the codestrip having a sufficient quality and length. According to the invention, a comparatively low-cost codestrip 18 is employed, and positional errors in the slits of the codestrip are corrected electronically, as will be explained hereinafter.

As is shown in figure 2, a system for detecting the position of the carriage 10 comprises the sensors S1 and S2, a clock CK, a counter 22, a processor 24, a register 26 and a digital comparator 28. The processor 24 may be a known microprocessor with peripheral devices such as RAM and ROM memories, I/O-ports and the like and may also be used for other purposes, for example for performing control functions in conjunction with the operation of the printhead.

The clock CK delivers a high frequency clock signal to the counter 22. The counter 22 is reset when the carriage 10 starts to move at one lateral edge of the platen 12, or at the latest when the sensor S1 reaches the first slit (having an index $i = 0$). The counter then starts to count the pulses of the clock signal. Whenever the sensor S1 detects a slit 20 of the codestrip, the slit being designated by an index $i$, the current count value of the counter 22 is read by the processor 24 and is registered as a time value $t1_i$. Likewise, when the trailing sensor S2 detects a slit $i$, the count value of the counter 22 is read registered as a time value $t2_i$. On the basis of these values, the processor 24 calculates corrected position coordinates $x_i$ indicating the exact positions of the slits 20 of the codestrip 18, as will be explained in detail as the description proceeds.

The corrected position coordinates $x_i$ are memorized in the processor 24 and may then be utilized in subsequent scan cycles of the carriage 10. The position values may be updated whenever there exists a possibility that a change has occured, for example due to thermal expansion of the frame body 16 and the codestrip. For example, the position values may be updated after a certain number of scan cycles, after a certain time of operation, in each first scan cycle after the printer has been switched off, or the like.

During the movement of the carriage, the actual scan position (which may be defined as the x-coordinate of the trailing sensor S2) can be determined in the processor 24 by counting the detection signals received from the sensor S2, i.e. by identifying the index number $i$ of the slit, and by calculating the associated position value $x_i$ or by recalling the stored value $x_i$ from the memory.

In the shown example, the system may be configured to deliver a synchronisation pulse P each time the carriage or, more exactly, the sensor S2, reaches one of a number of predetermined x-positions. To this end, the processor 24 is programmed to calculate the actual x-position of the carriage and the velocity v of the carriage on the basis of the detection signals from the sensors S1, S2 and the time values supplied from the counter 22, and to calculate a predicted time at which the sensor is going to reach the predetermined x-position. This predicted time is latched in the register 26. The contents of the register 26 is updated while the carriage approaches the predetermined x-position and the predicted time becomes more and more reliable. The comparator 28 compares the contents of the register 26 to that of the counter 22 and delivers the synchronisation pulse P when the two values coincide.

It will be appreciated that, in this embodiment, the predetermined x-positions may be selected arbitrarily and are not limited to the positions of the slits 20 of the codestrip. In fact, the spacial resolution with which positions can be detected with the proposed system is not limited to the resolution of the codestrip but is mainly determined by the frequency of the clock CK and the velocity of the carriage.

It is noted that the system shown in figure 2 may also be configured to deliver a synthetic pulse train in which each pulse reflects a fixed minute increment of the actual position of the carriage 10. In this case, as soon as a current pulse P has been delivered, the predetermined x-position is incremented by the desired increment, and the predicted time at which the carriage will reach the new position is latched in the register 26.

While the counter 22 has been shown as a separate block in figure 2, the function of this counter and as well the functions of the register 26 and the comparator 28 may also be incorporated in the processor 24.

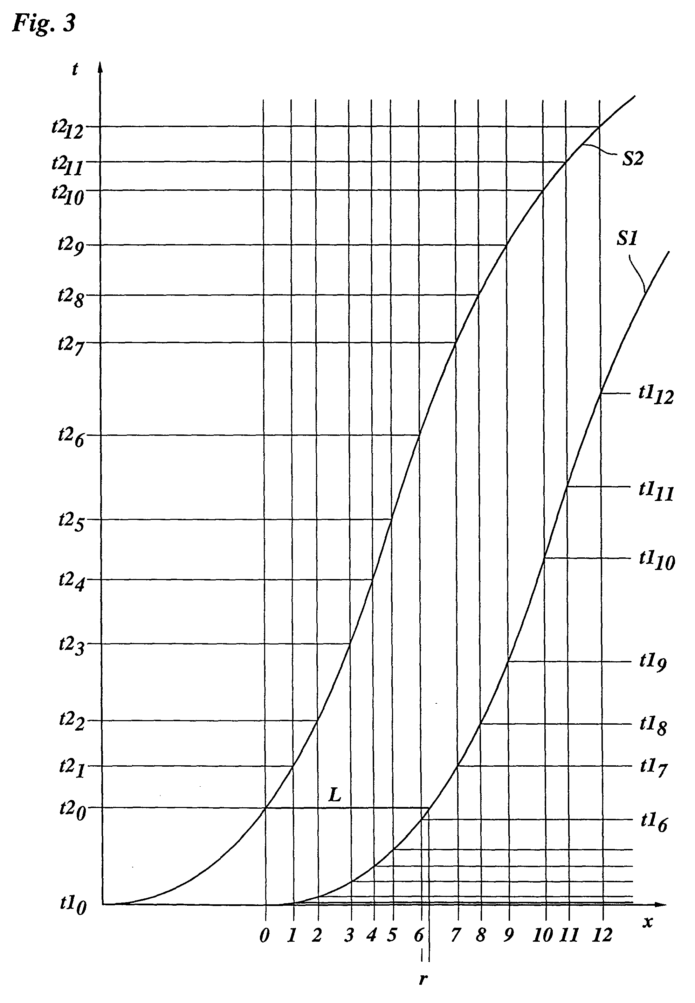

The various processings performed in the processor 24 for determining the position values $x_i$ of the slits of the codestrip and the velocity v of the carriage 10 will now be explained on conjunction with the time-displacement diagram shown in figure 3. In this diagram, the horizontal axis x is the displacement axis, and the vertical axis t is the time axis. The positions of the first thirteen slits of the codestrip (indicated by their index-numbers 0 - 12) are represented as vertical lines, and the movement of the sensors is indicated by the curves S1 and S2. It is observed that the slits are arranged at irregular spacings and the velocity of the carriage, i.e. the sensors S1 and S2, is not constant. The irregularities in the slit spacings and the velocity changes have however been exaggerated for illustration purposes. It is assumed that, initially, neither the x-coordinates of the slits nor the velocity of the carriage are known. Only the distance L between the two sensors is known exactly.

In the shown example, the carriage is accelerated from a rest position in which the leading sensor S1 coincides with the slit "0" on the codestrip. In practice, however, it is preferable that the carriage has already reached an essentially constant velocity when the sensor S1 passes the slit "0".

At the time $t1_6$, the sensor S1 has reached the slit "6". A short time later, at the time $t2_0$, the trailing sensor S2 reaches the slit "0". Thus, in the shown example, the distance L between the two sensors corresponds to approximately six slits on the codestrip (j = 6). In a practical embodiment, the number j will generally be larger. If, for example, the distance L amounts to 8 mm and the codestrip has three slits per mm (d = 1/3 mm), then L would correspond to approximately 24 slits (j = 24).

In any case, the x coordinate of the slit j, i.e. the slit "6" in figure 3 can be determined with high accuracy, because it differs from the known distance L only by a very small amount r. If $x_6$ designates the x-coordinate of the slit "6", then:

$$x_6 = L - r = L - v \, (t2_0 - t1_6) \tag{1}$$

wherein v is the (average) velocity of the carriage in the time interval between $t1_6$ and $t2_0$.

There are several ways of obtaining a reasonable estimate for the velocity v. In the simplest case, the velocity of the carriage can be regarded as a known constant machine parameter. Otherwise, the velocity may be regarded as substantially constant in the time interval between $t1_0$ and $t2_0$. This time interval is determined by the instants at which both sensors S1 and S2 pass the slit "0". Thus, the average velocity during this time interval is $L/(t2_0 - t1_0)$.

As another possibility, it may be considered that the distance between the slits "0" and "1" is equal to the nominal slit distance d, so that the velocity can be calculated as $v = d/(t2_1 - t2_0)$. Alternatively, the timing signals from the first sensor S1 may be used: $v = d/(t1_6 - t1_5)$ or, after the sensor S1 has reached the slit "7": $v = d/(t1_7 - t1_6)$. The accuracy may be increased by calculating an average or a weighted average of the various values for the velocity v.

An even more reliable estimate for the velocity v used in equation (1) can be obtained by assuming that the movement of the sensor S1 between "0" and "6" can approximately be described as a motion with constant acceleration.

$$v(t) = v_0 + a \, t \tag{2}$$

Since, in practice, the velocity of the carriage will be almost constant and velocity fluctuations will have a rather low frequency, this assumption provides in fact a good approximation. If V1 designates the average velocity in the first half of the motion, i.e. between "0" and "3", and V2 indicates the average velocity in the second half, i.e. between "3" and "6", then it is found that:

$$V1 = v_0 + (1/4) \, a \, t \qquad (3)$$

$$V2 = v_0 + (3/4) \, a \, t \qquad (4)$$

Resolving the equations (3) and (4) for the initial velocity $v_0$ and the final velocity v yields:

$$v_0 = (3/2) \, V1 - (1/2) \, V2 \qquad (5)$$

and

$$v = (3/2) \, V2 - (1/2) \, V1 \qquad (6)$$

Since the velocities V1 and V2 are averages over a large number (j/2) of slits, they can be detected with rather high accuracy, utilizing the detected timings $t1_0$, $t1_3$ and $t1_6$ and the nominal slit distance d. A possible systematic error which may be introduced by utilizing the nominal distance d (instead of the unknown actual distances between "0" and "3" and between "3" and "6") may be eliminated as follows. The initial velocity v0 and the final velocity v obtained from equations (5) and (6) may be used to calculate the average velocity over the whole interval from "0" to "6". If this average velocity deviates from the more reliable value $L/(t2_0 - t1_0)$, then the final velocity v obtained from equation (6) is multiplied by a scaling factor which corrects the deviation in the average velocities.

Even if the velocity v inserted in equation (1) includes a certain error, this error influences only the small value r, so that the total error in the coordinate value $x_6$ is very small, in particular when the distance L covers a large number j of slits.

In addition, the less reliable term r in equation (1) can always be made smaller than half the maximum distance between successive slits. If, in figure 3, L would be slightly larger, so that r would be larger than half the distance between "6" and "7", then the equation (1) would be replaced by the following equation (1'):

$$x_7 = L + r = L + v \, (t1_7 - t2_0) \qquad (1')$$

In this case the sensor S2 reaches the slit "0" earlier than the sensor S1 reaches the slit "7".

When, in the example of figure 3, the movement of the carriage continues and the trailing sensor S2 reaches the slit "6" or "7" of which the x coordinate is known exactly, then the x-position of slit "12" or "13" can be determined in the same way. By iterating this procedure, the x-coordinate of every j-th slit over the whole length of a codestrip 18 can be detected with high accuracy, regardless of the quality of the codestrip. Thus, any systematic errors due to expansion or shrinkage of the codestrip can be corrected.

The error involved in each individual itteration step is given by the error in the determination of r. Since r never becomes larger than half the distance d between two successive slits, this error is not larger than Dv*d/2 wherein Dv is the error in the determination of the velocity v. This error can occur in each iteration step, that is, each time the carriage has travelled the distance L. Thus, when the carriage travels over a long distance, the accumulated error is proportional to this distance but inversely proportional to L.

In the above embodiment, it is important the the distance L is known exactly. If the carriage 10 is provided with an additional sensor which is capable of detecting the edge of the printing medium disposed on the platen 12, then the result of the position detection can be compared to the known width of the printing medium, and the comparison result can be used to re-calibrate the distance L. Then, a reliable position detection can be guaranteed even if the distance L between the sensors S1 and S2 is not stable.

Of course, the known x-coordinates of every j-th slit can be used to calibrate the x-coordinates of all the other slits. In a very rough approach, this can be done simply by assuming the distances between the pairs of subsequent slits are equal. However, since the velocity v of the carriage has been determined in one of the ways described above, a more exact correction of the x-coordinates of the slits is possible by taking the velocity of the carriage into account.

Referring to figure 3, if it is assumed that the acceleration of the carriage between the slits "0" and "6" is constant, the average velocities $V_i$ in the intervals between the slits "0" and "i" (i = 2 ... 5) can be calculated, and the corresponding x-coordinates $x_i$ of the slits are given by $x_i = V_i (t1_i - t1_0)$.

In a preferred embodiment, the coordinate values x, are determined on the basis of the assumption that the velocity of the carriage in the interval between the slits i-1 and i is essentially the same as the velocity in the interval between the slits i and i+1. Then, the ratio between the length of two neighbouring slit intervals should be equal to the ratio of the time intervals in which the sensor S1 or S2 travels through these slit intervals. If, for example, the signals from the sensor S2 are used, the processor 24 determines the ratios $Ci = dt_{i-1} / dt_{i-2}$, wherein $dt_{i-1}$ is the time in which the sensor S2 travels from slit i-1 to slit i and $dt_{i-2}$ is the time in which this sensor travels from the slit i-2 to the slit i-1. $C_1$ is set to 1. When the ratios Ci have been determined for all slit intervals between "1" and "j" (j = 6 in figure 3), normalized slit spacings $D_i$ are calculated as follows:

$$D_0 = 1$$

$$D_1 = 1 \text{ x C1}$$

$$D_2 = 1 \text{ x C1 x C2}$$

$$D_3 = 1 \text{ x C1 x C2 x C3}$$

and so on.

These normalized slit spacings $D_i$ indicate the spacings between the slits i-I and i relative to the spacing between the slits "0" and "1".

In the next step, the normalized slit spacings $D_i$ are summed from i = 1 to i= j, and the sum is stored in the memory of the processor 24.

Then, the absolute slit spacings di are calculated by multiplying the normalized spacings $D_i$ with the known total distance between the slits "0" and j and by dividing the product by the stored sum. The coordinate values $x_i$ are then calculated by summing the absolute slit spacings from 0 to i.

Table I gives an example which is based on the data shown in figure 3.

Table I

| i | $dt_i$ | $C_i$ | $D_i$ | $d_i$ | $x_i$ | comp | err |
|---|---|---|---|---|---|---|---|
| 0 | | | | | 0,00 | 0,00 | 0,00 |
| 1 | 10,09 | 1,00 | 1,00 | 4,20 | 4,20 | 6,71 | 2,51 |
| 2 | 10,94 | 1,08 | 1,08 | 4,56 | 8,76 | 12,59 | 3,83 |
| 3 | 18,39 | 1,68 | 1,82 | 7,66 | 16,42 | 20,57 | 4,15 |
| 4 | 15,46 | 0,84 | 1,53 | 6,44 | 22,87 | 26,02 | 3,15 |
| 5 | 14,54 | 0,94 | 1,44 | 6,06 | 28,92 | 30,64 | 1,72 |
| 6 | 20,25 | 1,39 | 2,01 | 8,44 | 37,36 | 37,36 | 0,00 |
| | | sum: | 8,89 | | | | |

The indexes i of the slits "0" to "6" are indicated in the first column. The second column indicates the lengths of the time intervals $dt_i$ between the successive time values $t2_i$. The third column indicates the ratios $C_i$ between the successive time intervals $dt_i$. The fourth column indicates the normalized slit spacings $D_i$ calculated as running products of the ratios $C_i$. The sum of these normalized slit spacings is also indicated. The fifth column gives the absolute slit spacings di calibrated by means of the known total distance from "0" to "6". The corresponding coordinate values $x_i$ of the slits are indicated in the sixth column. For comparison, the seventh column indicates the actual x-coordinate of the slits in figure 3, and the last column indicates the error between the calculated coordinates and the actual coordinates.

It is observed that the error is zero for the slits "0" and "6" because the coordinate values of these slits are known. For the other slits, the error reaches a maximum half way between the first and the last slit.

In the given example the errors are unrealistically high because the assumption that the velocity of the carriage does not substantially change over distance of two slits is not really fulfilled. In practice, the procedure described above yields fairly reliably values for the x-coordinates of the slits, so that random variations in the slit positions can be successfully corrected. To further increase the accuracy, it is possible to detect the time intervals $dt_i$ with both sensors and to average the results.

When the coordinate values for i = 0 to i = 6 have been determined, these coordinate values can be used immediately for improving the accuracy in the detection of the velocity v of the carriage which is needed for determining the exact position of the slit "12" in the next iteration step. Then, the x-coordinates of the slits from i = 7 to i = 11 are determined in the same manner as above.

The accuracy in the measurement of the slit positions can be further enhanced by repeating the above procedure for several scan cycles and averaging the results. This averaging procedure will for example eliminate errors which are due to noise in the detection signals of the sensors S1 and S2.

Once the x-coordinates of the slits have been detected with a satisfactory accuracy, the burden on the processor 24 is greatly relieved. The processing steps which then have to be carried out in order to provide the output signal P can be performed in real time, even if the capacity of the processor 24 is low. The more complex processings for updating the slit coordinates can be performed when the processor 24 is not busy with other tasks.

In a modified embodiment of the invention, a gauge codestrip 30 is provided at one or both ends of the codestrip 18. This gauge codestrip is of a very high quality but has only a length which is slightly larger than the distance L between the sensors. Thus, the costs for the gauge codestrip are relatively low.

In this embodiment, the distance L between the sensors S1 and S2 can be measured by means of the gauge codestrip 30. This has the advantage that the processor 24 can detect changes of the distance L which may be due to thermal expansion of the substrate on which the sensors S1 and S2 are mounted.

This embodiment also permits another way to detect the coordinate values of the slits of the less reliable codestrip 18. Referring again to figure 3, it can now be assumed that the slits "0" to "7" are provided on the gauge codestrip 30, so that their x-coordinates are known exactly. The timing signals provided by the trailing sensor S2 can be used to determine the velocity of the carriage with high accuracy. Thus, when the trailing sensor S2 passes the slits "1" and "2", the average velocity of the carriage during this interval can be measured exactly. Essentially at the same time the leading sensor S1 passes the slits "7" and "8" with the same average velocity. Thus, the distance between the slits "7" and "8" can be measured exactly.

The subsequent slit spacings between the slits "8", "9", ... "12" can be measured in the same way. Later, when the traling sensor S2 passes these slits, the known slit spacings can again be used for measuring the velocity of the carriage. In turn, this velocity permits to detect the spacings between the next slits on the inaccurate codestrip 18. Thus, the x-coordinates of all slits 20 of a codestrip 18 can be measured. It would even be possible to use a "codestrip" on which the slits 20 are distributed irregularly.

The error involved in the calculation of the x-coordinates $x_8$ to $x_{12}$ or, more generally, from $x_{j+1}$ to $x_{2j}$, is small, because these calculations are based directly on the positions of the first j slits on the gauge codestrip 30. However, in the calculation of the coordinates of each subsequent set of j slits, the error increases exponentially. Same applies to the errors in the velocities of the carriage in the various sections of the codestrip.

It is possible, however, to correct these errors, because the distance L has been measured exactly in the initial phase of the scan movement.

For example, the distance between two slits i and i+j can be determined in two different ways. A first way is to form the difference between the coordinate values which have been derived in the manner described above. The second way is to determine the distance by means of the known distance L, using the same procedure as in the first embodiment. The result obtained in this second way will be more reliable and can be used to calibrate or scale the coordinate values of all slits between i and i+j.

Similarly, the condition for the average velocity V:

$$V = L /(t2_i - t1_i)$$

can be used to check and calibrate the detected velocities.

It will be observed that the accuracy of the position detection is better in positions which are not too far away from the gauge codestrip 30. Consequently, the accuracy over the whole length of the codestrip 18 can be improved by providing gauge codestrips 30 at both ends and averaging the results obtained during the back and forth movements of the carriage.

While only specific embodiments of the invention have been described above, it will occur to a person skilled in the art that various changes and modifications can be made without departing from the scope of the appended claims. It will also be understood that the invention is not limited to printers and scanners but may also be applied to the detection of the position of a moving object in other applications.

**Claims**

1. Method for detecting the position of a carriage (10) moving along a codestrip (18) provided with a sequence of position marks (20), in a printer, plotter or scanner, wherein sensing means (S1, S2) mounted on the carriage generate a detection signal each time they detect an individual position mark, the timings of the detection signals are measured, and the position is determined on the basis of these timings, wherein two sensors (S1, S2) are arranged on the carriage at a predetermined distance L from one another in the direction of movement, and the position information is derived from the timings of the detection signals from both sensors and is calibrated on the basis of the distance L between the two sensors.

2. Method according to claim 1, comprising the steps of:

   (a) registering a first timing ($t1_6$) at which one sensor (S1) detects a first position mark,
   (b) registering a second timing ($t2_0$) immediately subsequent to the first timing, at which the other sensor (S2) detects a second position mark,
   (c) calculating an amount r by which the first sensor (S1) is displaced between the first and second timings, on the basis of the difference between these timings and the velocity of the carriage, and
   (d) calibrating the distance between the first and second position marks to the difference L - r when the first position mark is ahead of the second one in the direction of movement of the carriage, and to the sum L + r when the first position mark is positioned rearward of the second one in the direction of movement.

3. Method according to claim 2, wherein the sequence of steps (a) to (d) is iterated for successive pairs of position marks which have a mutual distance essentially equal to L.

4. Method according to claim 2 or 3, wherein the positions ($x_i$) of the position marks intervening between the first and second position marks are determined on the basis of the distance between the first and second position marks, the timings of the detection signals from at least one of the two sensors, and the velocity of the respective sensor during its travel between the first and second position marks.

5. Method according to claim 4, comprising the steps of

   - determining the time intervals ($dt_i$) between the successive detection signals from one of the sensors,
   - calculating the ratios ($C_i$) between the successive time intervals,
   - calculating, for each intervening position mark, the running product ($D_i$) of the ratios ($C_i$) up to the current position mark,
   - calculating the sum of the running products and
   - calculating the positions of each position mark intervening between the first and second position marks by multiplying the associated running product ($D_i$) with the distance between the first and second position marks and dividing the result by the sum of the running products.

6. Method according to any of the preceding claims, wherein a clock signal of clock (CK) is counted, a predicted time at which the carriage will reach a predetermined position is calculated on the basis of the actual position and velocity of the carriage, which both have been determined from the detection signals of the two sensors (S1, S2), updating the predicted time as the carriage approaches the predetermined position, and delivering a synchronisation pulse (P) indicating that the carriage has reached the predetermined position when the count value of the clock pulses equals the predicted time.

7. Method according to any of the preceding claims, wherein the distance (L) between the two sensors (S1 and S2) is determined by detecting position marks on a gauge codestrip (30) provided at at least one end of the codestrip (18).

8. System for detecting the position of a carriage (10) moving along a codestrip (18) provided with a sequence of position marks (20), comprising sensing means (S2, S2) mounted on the carriage, and processing means (24) measuring the timings at which the sensing means detect the position marks (20) on the codestrip and determining the position of the carriage on the basis of these timings, wherein the sensing means comprise two sensors (S1, S2) arranged on the carriage with a predetermined mutual distance in the direction of movement, and the processing means (24) registers the timings of the detection signals from both sensors and calibrates the positions of the position marks derived from these timings on the basis of the known distance (L) between the two sensors.

9. System according to claim 8, wherein the processing means (24) is adapted to memorize the detected positions of the position marks (20) for subsequent movement cycles of the carriage (10).

**Patentansprüche**

1. Verfahren zum Detektieren der Position eines Wagens (10), der sich längs eines Codestreifens (18) bewegt, der mit einer Folge von Positionsmarken (20) versehen ist, in einem Drucker, Plotter oder Scanner, bei dem auf den Wagen montierte Sensoreinrichtungen (S1, S2) jedes Mal, wenn sie eine einzelne Positionsmarke detektieren, ein Detektionssignal erzeugen, die Zeiten der Detektionssignale gemessen werden und die Position auf der Grundlage dieser Zeiten bestimmt wird, wobei zwei Sensoren (S1, S2) in Bewegungsrichtung in einem vorgegebenen Abstand L zueinander auf dem Wagen angeordnet sind und die Positionsinformation aus den Zeiten der Detektionssignale von beiden Sensoren abgeleitet und auf der Grundlage des Abstands L zwischen den beiden Sensoren kalibriert wird.

2. Verfahren nach Anspruch 1, mit den Schritten:

   (a) Registrieren einer ersten Zeit ($t1_6$), zu welcher ein Sensor S1 eine erste Positonsmarke detektiert,

   (b) Registrieren einer zweiten Zeit ($t2_0$) unmittelbar nach der ersten Zeit, zu welcher der andere Sensor S2 eine Positionsmarke detektiert,

   (c) Berechnen eines Betrages r, um welchen der erste Sensor S1 sich zwischen den ersten und zweiten Zeiten bewegt hat, auf der Grundlage der Differenz zwischen diesen Zeiten und der Geschwindigkeit des Wagens, und

   (d) Kalibrieren des Abstands zwischen den ersten und zweiten Positionsmarken auf die Differenz L - r, wenn die erste Positionsmarke in Bewegungsrichtung des Wagens vor der zweiten liegt und auf die Summe L + r, wenn die erste Positionsmarke in Bewegungsrichtung hinter der zweiten liegt.

3. Verfahren nach Anspruch 2, bei dem die Folge der Schritte (a) bis (d) für aufeinanderfolgende Paare von Positionsmarken, die einen gegenseitigen Abstand im wesentlichen gleich L haben, iteriert wird.

4. Verfahren nach Anspruch 2 oder 3, bei dem die Positionen $x_i$ der zwischen den ersten und zweiten Positionsmarken liegenden Positionen auf der Grundlage des Abstands zwischen den ersten und zweiten Positionsmarken, den Zeiten der Detektionssignale wenigstens eines der beiden Sensoren und der Geschwindigkeit des betreffenden Sensors während seiner Bewegung zwischen der ersten und zweiten Positionsmarken bestimmt werden.

5. Verfahren nach Anspruch 4, mit den Schritten

   - Bestimmen der Zeitintervalle (dti) zwischen den aufeinanderfolgenden Detektionssignalen von einem der Sensoren,

   - Berechnen der Verhältnisse ($C_i$) zwischen den aufeinanderfolgenden Zeitintervallen,

   - Berechnen, für jede dazwischenliegende Positionsmarke des laufenden Produkts ($D_i$) der Verhältnisse ($C_i$) bis zur aktuellen Positionsmarke,

   - Berechnen der Summe der laufenden Produkte und

   - Berechnen der Positionen jeder Positionsmarke zwischen der ersten und der zweiten Positionsmarke durch Multiplizieren des zugehörigen laufenden Produkts ($D_i$) mit dem Abstand zwischen den ersten und zweiten Positionsmarken und Dividieren des Ergebnisses durch die Summe der laufenden Produkte.

6. Verfahren nach einem der vorstehenden Ansprüche, bei dem ein Taktsignal eines Taktgebers (CK) gezählt wird, eine vorhergesagte Zeit, zu welcher der Wagen eine vorbestimmte Position erreichen wird, auf der Grundlage der aktuellen Position und Geschwindigkeit des Wagens berechnet wird, die beide aus den Detektionssignalen der beiden Sensoren (S1, S2) bestimmt worden sind, die vorhergesagte Zeit aktualisiert wird, während sich der Wagen der vorbestimmten Position annähert, und ein Synchronisationsimpuls (P), der angibt, daß der Wagen die vorbestimmte Position erreicht hat, ausgegeben wird, wenn der Zählwert der Taktimpulse gleich der vorhergesagten Zeit ist.

**7.** Verfahren nach einem der vorstehenden Ansprüche, bei dem der Abstand (L) zwischen den beiden Sensoren (S1 und S2) durch das Detektieren von Positionsmarken auf einem Eich-Codestreifen (30) bestimmt wird, der an wenigstens einem Ende des Codestreifens (18) vorgesehen ist.

**8.** System zum Detektieren der Position eines Wagens (10), der sich längs eines Codestreifens (18) bewegt, der eine Folge von Positionsmarken (20) aufweist, mit auf dem Wagen montierten Sensoreinrichtungen (S1, S2) und einer Prozessoreinrichtung (24), die die Zeiten mißt, an denen die Sensoreinrichtungen die Positionsmarken (20) auf dem Codestreifen passieren, und die Position des Wagens auf der Grundlage dieser Zeiten bestimmt, wobei die Sensoreinrichtung zwei Sensoren (S1, S2) aufweist, die in Bewegungsrichtung in einem vorgegebenen Abstand zueinander angeordnet sind, und die Prozessoreinrichtung (24) die Zeiten der Detektionssignale von beiden Sensoren registriert und die aus diesen Zeiten auf der Grundlage des bekannten Abstands (L) zwischen den beiden Sensoren abgeleiteten Positionen der Positionsmarken kalibriert.

**9.** System nach Anspruch 8, bei dem die Prozessoreinrichtung (24) dazu ausgerichtet ist, die detektierten Positionen der Positionsmarken (20) für nachfolgende Bewegungszyklen des Wagens (10) zu speichern.

## Revendications

**1.** Procédé de détection de la position d'un chariot (10) se déplaçant le long d'une bande code (18) pourvue d'une succession de marques de position (20), dans une imprimante, un traceur graphique ou un numériseur graphique, selon lequel des moyens capteurs (S1, S2) montés sur le chariot produisent un signal de détection chaque fois qu'ils détectent une marque de position individuelle, les instants des signaux de détection sont mesurés et la position est déterminée sur la base de ces instants, et selon lequel deux capteurs (S1, S2) sont disposés sur le chariot à une distance préfixée L l'un de l'autre suivant la direction de déplacement et l'information de position est déduite des instants des signaux de détection provenant des deux capteurs et est corrigée à de nouvelles valeurs sur la base de la distance L entre les deux capteurs.

**2.** Procédé suivant la revendication 1, comprenant les opérations consistant :

   (a) à enregistrer un premier instant ($t1_6$) auquel un premier capteur (S1) détecte une première marque de position,
   (b) à enregistrer un second instant ($t2_0$), suivant immédiatement le premier instant, auquel le second capteur (S2) détecte une seconde marque de position,
   (c) à calculer la valeur r dont le premier capteur (S1) est déplacé entre les premier et second instants, sur la base de la différence entre ces instants et de la vitesse du chariot, et
   (d) à corriger la distance entre les première et seconde marques de position à la valeur de la différence L - r lorsque la première marque de position est en avant de la seconde dans le sens de déplacement du chariot et à la valeur de la somme L + r lorsque la première marque de position est située en arrière de la seconde dans le sens de déplacement.

**3.** Procédé suivant la revendication 2, selon lequel la séquence d'opérations (a) à (d) est répétée par itération pour des paires successives de marques de position qui ont une distance mutuelle essentiellement égale à L.

**4.** Procédé suivant la revendication 2 ou 3, selon lequel les positions ($x_i$) des marques de position intermédiaires entre les première et seconde marques de position sont déterminées sur la base de la distance entre les première et seconde marques de position, des instants des signaux de détection provenant d'au moins l'un des deux capteurs et de la vitesse du capteur respectif pendant son parcours entre les première et seconde marques de position.

**5.** Procédé suivant la revendication 4, comprenant les opérations consistant :

   - à déterminer les intervalles de temps ($dt_i$) séparant les signaux de détection successifs provenant de l'un des capteurs,
   - à calculer le rapport ($C_i$) entre les intervalles de temps successifs,

- à calculer, pour chacun marque de position intermédiaire, le produit cumulé courant ($D_i$) des rapports ($C_i$) jusqu'à la marque de position en cours,
- à calculer la somme des produits cumulés courants et
- à calculer les positions de chaque marque de position intermédiaire entre les première et seconde marques de position en multipliant le produit cumulé courant ($D_i$) associé par la distance entre les première et seconde marques de position et en divisant le résultat par la somme des produits cumulés courants.

6. Procédé suivant l'une quelconque des revendications précédentes, selon lequel le signal d'horloge d'une horloge (CK) fait l'objet d'un comptage, un temps prédit auquel le chariot va atteindre une position préfixée est calculé sur la base de la position réelle et de la vitesse du chariot, lesquelles ont toutes deux été déterminées à partir des signaux de détection des deux capteurs (S1, S2), en mettant à jour le temps prédit lorsque le chariot s'approche de la position préfixée et en délivrant une impulsion de synchronisation (P) indiquant que le chariot a atteint la position préfixée lorsque la valeur de compte des impulsions d'horloge est égale au temps prédit.

7. Procédé suivant l'une quelconque des revendications précédentes, selon lequel la distance (L) entre les deux capteurs (S1 et S2) est déterminée en détectant des marques de position sur une bande code d'étalonnage (30) prévue à au moins une extrémité de la bande code (18).

8. Système permettant de détecter la position d'un chariot (10) se déplaçant le long d'une bande code (18) pourvue d'une succession de marques de position (20), comprenant des moyens capteurs (S1, S2) montés sur le chariot et des moyens de traitement (24) mesurant les instants auxquels les moyens capteurs détectent les marques de position (20) situées sur la bande code et déterminant la position du chariot sur la base de ces instants, dans lequel les moyens capteurs comprennent deux capteurs (S1, S2) disposés sur le chariot avec une distance mutuelle préfixée suivant la direction de déplacement, et les moyens de traitement (24) enregistrent les instants des signaux de détection provenant des deux capteurs et corrigent à de nouvelles valeurs les positions des marques de position déduites de ces instants sur la base de la distance connue L entre les deux capteurs.

9. Système suivant la revendication 8, dans lequel les moyens de traitement (24) sont aptes à mémoriser les positions détectées des marques de position (20) pour des cycles successifs de déplacement du chariot (10).

**Fig. 1**

**Fig. 2**

*Fig. 3*